# EUROPÄISCHE PATENTSCHRIFT

(11) **EP 3 286 050 B1**
(45) Veröffentlichungstag und Bekanntmachung des Hinweises auf die Patenterteilung: **27.07.2022**
(21) Anmeldenummer: 16717629.6
(22) Anmeldetag: 20.04.2016
(51) Int. Cl.: B60T 13/26, B60T 8/17, B60T 13/38, B60T 13/68, B60T 15/20

(54) **STEUERVENTILEINRICHTUNG FÜR EINE PARKBREMSEINRICHTUNG FÜR KRAFTFAHRZEUGE SOWIE PARKBREMSEINRICHTUNG FÜR KRAFTFAHRZEUGE**
CONTROL VALVE ARRANGEMENT FOR A PARKING BRAKE FOR VEHICLES AND PARKING BRAKE ARRANGEMENT FOR VEHICLES
ARRANGEMENT DE VANNE DE CONTRÔLE POUR UN FREIN DE PARKING POUR VÉHICULES ET ARRANGEMENT DE FREIN DE PARKING POUR VÉHICULES

(30) Priorität: 22.04.2015 DE 102015106144
(43) Veröffentlichungstag der Anmeldung: 28.02.2018
(73) Patentinhaber: KNORR-BREMSE Systeme für Nutzfahrzeuge GmbH, 80809 München (DE)
(72) Erfinder: USLU, Mustafa, 80997 München (DE); LEINUNG, Andreas, 81245 München (DE); MICHALSKI, Max, 85579 Neubiberg (DE)
(86) Internationale Anmeldenummer: PCT/EP2016/058734
(87) Internationale Veröffentlichungsnummer: WO 2016/169972

(56) Entgegenhaltungen:
- WO-A1-2014/009457
- DE-B3-102009 059 816

## Beschreibung

Die vorliegende Erfindung betrifft eine Steuerventileinrichtung für eine Parkbremseinrichtung für Kraftfahrzeuge mit einem Gehäuse mit einem Zylinderraum und einer Gehäusekammer, einem im Zylinderraum des Gehäuses geführten Schaltkolben, einer Feder, mittels derer der Schaltkolben federbelastet ist, mit einem ersten Anschluss und einem zweiten Anschluss, die mit der Gehäusekammer verbunden sind, und einem dritten Anschluss, der mit dem Zylinderraum verbunden ist. Des Weiteren betrifft die vorliegende Erfindung eine Parkbremseinrichtung für Kraftfahrzeuge.

Parkbremsen (auch Feststellbremsen genannt) von Nutzfahrzeugen einschließlich Anhängern sowie Schienenfahrzeugen sind heute regelmäßig mit Federspeicherbremszylindern ausgestattet, die in Lösestellung einen Federkompressionsraum mit Druckluft beaufschlagen und dadurch die Feder gespannt halten, während zum Parkbremsen der Federkompressionsraum entlüftet, d. h. mit Atmosphärendruck verbunden wird, so dass der Bremszylinder unter Wirkung der Feder eine Bremskraft erzeugt (vgl. Bosch, Kraftfahrtechnisches Taschenbuch, 22. Auflage, Düsseldorf, 1995, S. 648).

Aus der DE 10 2009 059 816 A1 ist bereits eine gattungsgemäße Parkbremseinrichtung für Kraftfahrzeuge bekannt, die eine bi-stabile Steuerventileinrichtung aufweist.

Aus der WO 2014/009457 A1 ist eine gattungsgemäße Steuerventileinrichtung für eine Parkbremseinrichtung für Kraftfahrzeuge bekannt.

Es ist die Aufgabe der vorliegenden Erfindung, eine Steuerventileinrichtung für eine Parkbremseinrichtung für Kraftfahrzeuge der eingangs genannten Art in vorteilhafter Weise weiter zu bilden, insbesondere dahingehend, dass eine Steuerventileinrichtung einfacher aufgebaut sein kann und insbesondere im Zusammenhang mit der sog. Stretch-Brake-Funktion bessere Einstellmöglichkeiten hinsichtlich Arbeitsverhalten und Schaltpunkt bietet.

Diese Aufgabe wird erfindungsgemäß gelöst durch eine Parkbremseinrichtung mit den Merkmalen des Anspruchs 1. Danach ist vorgesehen, dass eine Steuerventileinrichtung für eine Parkbremseinrichtung für Kraftfahrzeuge ein Gehäuse mit einem Zylinderraum und einer Gehäusekammer, einen im Zylinderraum des Gehäuses geführten Schaltkolben, eine Feder, mittels derer der Schaltkolben federbelastet ist, einen ersten Anschluss und einen zweiten Anschluss, die mit der Gehäusekammer verbunden sind, und einen dritten Anschluss, der mit dem Zylinderraum verbunden ist, aufweist, wobei der Schaltkolben einen ersten Kolbenring und einen zweiten Kolbenring aufweist, wobei der erste Kolbenring im Zylinderraum geführt ist und wobei der zweite Kolbenring außerhalb des Zylinderraums in einer Gehäusekammer befindlich ist, wobei in einer ersten Schaltstellung der zweite Kolbenring den Zylinderraum gegen die Gehäusekammer abdichtet und in wenigstens einer zweiten Schaltstellung der Zylinderraum und die Gehäusekammer miteinander verbunden sind, wobei in der ersten Schaltstellung die pneumatisch wirksamen Flächen des ersten Kolbenrings und des zweiten Kolbenrings, die einander zugewandt sind, im Wesentlichen identisch sind.

Die Erfindung basiert auf dem Grundgedanken, durch die Gestaltung der Abmessungen der beiden Kolbenringe des Schaltkolbens die Einstellbarkeit der Steuerventileinrichtung zu beeinflussen. Durch den Umstand, dass in der ersten Schaltstellung die pneumatisch wirksamen Flächen des ersten Kolbenrings und des zweiten Kolbenrings im Wesentlichen identisch sind, lässt sich das Ansprechverhalten und der Schaltpunkt der Steuerventileinrichtung hochgenau einstellen. Insbesondere ist es möglich, durch die Wahl der Feder das Ansprechverhalten der Steuerventileinrichtung einzustellen. Die Steuerventileinrichtung kann ein pneumatisches Steuerventil sein. Insbesondere kann die Steuerventileinrichtung ein 3/2-Wegeventil sein.

Aufgrund des Umstandes, dass in der ersten Schaltstellung die pneumatisch wirksame Flächen des ersten Kolbenrings und des zweiten Kolbenrings der Steuerventileinrichtung im Wesentlichen identisch sind, wird es möglich, sämtliche Eingänge bzw. Ausgänge der Steuerventileinrichtung mit Druckluft zu versorgen und dabei nicht die pneumatische Bremsvorrichtung, die die erfindungsgemäße Steuerventileinrichtung aufweist, zu beeinträchtigen, also insbesondere die Parkbremseinrichtung aus der Fahrstellung in die Parkbremsstellung umzuschalten bzw. in die Nähe des Schaltpunktes zu gelangen. Dies ist insbesondere im Zusammenhang mit der sog. Stretch-Brake-Funktion (nur der Anhänger wird gebremst) von Vorteil. Es wird also möglich, während des Fahrzustandes der Parkbremseinrichtung unabhängig von der gelösten Parkbremse das Anhängersteuermodul der Parkbremseinrichtung anzusteuern und zu aktivieren, und dies aufgrund der Ausgestaltung der erfindungsgemäßen Steuerventileinrichtung derart, dass trotz entsprechendem Anliegen von Druck an sämtlichen Eingängen der Steuerventileinrichtung es nicht zu einem Umschalten aus der Fahrstellung in die Parkbremsstellung kommt und man insbesondere auch nicht in die Nähe des Schaltpunktes gelangt.

In weiterer Ausgestaltung der Erfindung kann vorgesehen sein, dass der Zylinderraum gegen die Gehäusekammer mittels einer am zweiten Kolbenring angeordneten Dichtung abgedichtet ist, wenn sich der Schaltkolben in der ersten Schaltstellung befindet. Die Dichtung kann beispielsweise durch einen O-Ring oder durch eine aufvulkanisierte Dichtung ausgebildet sein. Dadurch wird eine einfache und sichere Abdichtung von Zylinderraum und Gehäusekammer erreicht. Durch diesen einfachen Aufbau wird zudem die Zuverlässigkeit der Steuerventileinrichtung erhöht.

Die Dichtung kann sich in der dem Zylinderraum zugewandten Ringfläche des zweiten Kolbenrings befinden. Dadurch ergibt sich der Vorteil, dass die Dichtung nicht beim Wechseln von der ersten Schaltstellung in die zweite Schaltstellung und umgekehrt an einer Wandung gleitend reibt, sondern nur in der ersten Schaltstellung anliegt und im Übrigen frei ist. Dadurch wird auch die Lebensdauer der Dichtung und ihre Dichtwirkung verbessert.

Am Übergang von Zylinderraum zur Gehäusekammer kann durch eine Durchmesserverbreiterung im Gehäuse ein Ansatz vorgesehen sein, auf dem die Dichtung in der ersten Schaltstellung dichtend anliegt. Dadurch wird eine zuverlässige Dichtwirkung und Abdichtung von Zylinderraum und Gehäusekammer in der ersten Schaltstellung erreicht.

Der Ansatz kann einen umlaufenden Vorsprung aufweisen. Insbesondere kann vorgesehen sein, dass in der ersten Schaltstellung der umlaufende Vorsprung und die Dichtung aufeinander zu liegen kommen. Dadurch, dass die Dichtung nicht auf einer planen Fläche des Ansatzes, sondern auf einer abgesetzten Struktur wie einem umlaufenden Vorsprung in der ersten Schaltstellung aufsitzt, kann die Dichtwirkung verbessert werden.

Am Übergang vom Zylinderraum zur Gehäusekammer ist ein Ansatz durch eine Durchmesserverbreiterung vorgesehen, an dem ein Dichtelement angeordnet ist, insbesondere wobei das Dichtelement ein O-Ring oder eine aufvulkanisierte Dichtung ist.

Der zweite Kolbenring liegt dichtend auf dem Dichtelement in der zweiten Schaltstellung an, insbesondere wobei der zweite Kolbenring einen umlaufenden Vorsprung aufweist, der dichtend auf dem Dichtelement anliegt.

Des Weiteren kann vorgesehen sein, dass in der Radialfläche des ersten Kolbenrings eine zweite Dichtung angeordnet ist, die gegen die Wandung des Zylinderraums angestellt ist. Dadurch wird im Bereich des ersten Kolbenrings eine Abdichtung bereitgestellt, die verschieblich ist. Je nach Schaltstellung des Schaltkolbens wird somit der durch den Schaltkolben und den Zylinderraum definierte Ringraum vergrößert oder verkleinert. Die zweite Dichtung dient zur Abdichtung des Ringraums gegenüber einem auf der dem Ringraum abgewandten Seite des Kolbenrings liegenden Teils im Gehäuse der Steuerventileinrichtung.

Die zweite Dichtung kann die einzige Dichtung sein, die gegen die Wandung des Zylinderraums angestellt ist. Dadurch wird insgesamt weniger Reibung bei der Bewegung des Schaltkolbens erzeugt. Dadurch werden auch die Einstellmöglichkeiten der Steuerventileinrichtung erhöht, weil die geringere Reibung bei der Bewegung des Schaltkolbens eine höhere Bandbreite der Auswahl von Schaltpunkten ermöglicht. Auch ist es denkbar, beispielsweise nur durch ein Anlegen von Druck über den dritten Anschluss den Schaltkolben noch stabil in der ersten Schaltstellung halten zu können, weil durch die Bemessung der pneumatisch wirksamen Flächen des ersten Kolbenrings und des zweiten Kolbenrings der anliegende Druck für sich genommen zunächst nicht die Schaltstellung beeinflusst.

Die Feder kann in einem Federraum angeordnet sein, der durch die zweite Dichtung vom Zylinderraum pneumatisch getrennt ist. Dadurch wird der Aufbau der Steuerventileinrichtung vereinfacht.

Der Federraum kann einen weiteren Anschluss aufweisen. Dadurch kann über den Federraum der Schaltkolben pneumatisch angesteuert werden.

Des Weiteren kann vorgesehen sein, dass der zweite Kolbenring in der zweiten Schaltstellung den ersten Anschluss verschließt. Dadurch wird es möglich, den ersten Anschluss gegen den zweiten Anschluss in der zweiten Schaltstellung abzudichten.

Darüber hinaus betrifft die vorliegende Erfindung eine Parkbremseinrichtung für Kraftfahrzeuge mit wenigstens einer Steuerventileinrichtung. Bei der Steuerventileinrichtung dieser Parkbremseinrichtung handelt es sich um die vorstehend beschriebene Steuerventileinrichtung bzw. eine der möglichen Ausführungsformen hierzu.

Weitere Einzelheiten und Vorteile der vorliegenden Erfindung sollen nun anhand von in den Zeichnungen dargestellten Ausführungsbeispielen näher erläutert werden.

Es zeigen:
- Figur 1:: eine schematische Darstellung eines ersten Ausführungsbeispiels für eine erfindungsgemäße Parkbremseinrichtung mit einem Ausführungsbeispiel einer erfindungsgemäßen Steuerventileinrichtung in der Parkstellung;
- Figur 2:: eine schematische Darstellung der in Figur 1 gezeigten Parkbremseinrichtung mit einem Ausführungsbeispiel einer erfindungsgemäßen Steuerventileinrichtung in der Fahrstellung;
- Figur 3:: eine schematische Darstellung des in Figur 1 und Figur 2 gezeigten Ausführungsbeispiels der Steuerventileinrichtung in einer ersten Schaltstellung;
- Figur 4:: eine schematische Darstellung des in Figur 1 und Figur 2 gezeigten Ausführungsbeispiels der Steuerventileinrichtung in einer zweiten Schaltstellung; und
- Figur 5:: eine schematische Darstellung des in Figur 1 und Figur 2 gezeigten Ausführungsbeispiels der Steuerventileinrichtung in einer dritten Schaltstellung.

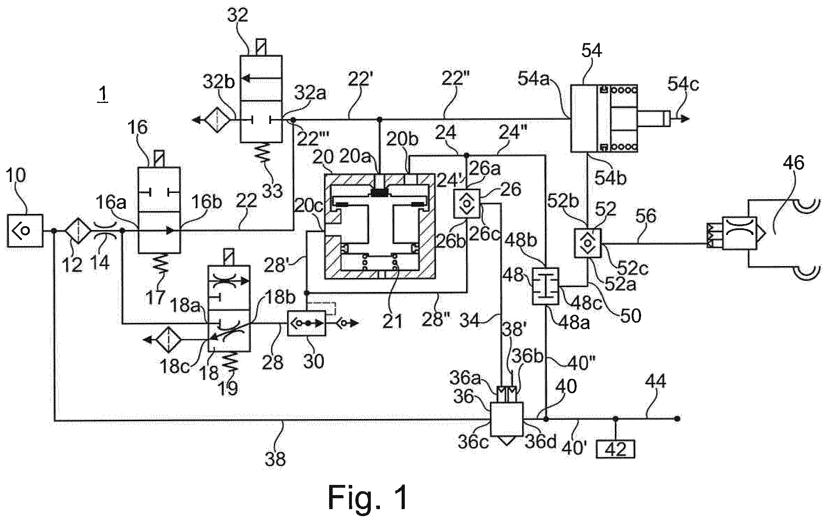

Die Figur 1 zeigt eine schematische Darstellung eines Ausführungsbeispiels einer erfindungsgemäßen Parkbremseinrichtung für Kraftfahrzeuge.

Figur 1 zeigt eine schematische Darstellung eines ersten Ausführungsbeispiels einer erfindungsgemäßen Parkbremseinrichtung 1 für Kraftfahrzeuge.

Die Parkbremseinrichtung 1 weist ein Rückschlagventil 10 auf, mittels dessen die Parkbremseinrichtung 1 an einer nicht näher dargestellten Druckluftversorgung angeschlossen ist.

Stromabwärts des Rückschlagventils 10 können eine Filtereinheit 12 und eine Drossel 14 vorgesehen sein.

Die Parkbremseinrichtung 1 hat weiter ein erstes elektrisch steuerbares Magnetventil 16 und ein zweites elektrisch steuerbares Magnetventil 18, an deren Ausgängen als Steuerventileinrichtung 20 ein pneumatisch steuerbares Steuerventil 20 angeschlossen ist.

Die beiden Magnetventile 16 und 18 sind über das Rückschlagventil 10 mit der nicht dargestellten Druckluftquelle des Fahrzeugs verbunden, über die Druckluft zuführbar ist.

Beide Magnetventile 16 und 18 werden jeweils durch eine Feder 17 bzw. 19 in eine Ruhelage gebracht.

Das Magnetventil 16 ist als sogenanntes 2/2-Wegeventil ausgebildet. Durch die Feder 17 ist das Magnetventil 16 monostabil und zwar stabil in der Ruhelage.

Grundsätzlich ist aber auch denkbar, dass das Magnetventil 16 als 3/2-Wegeventil ausgebildet ist. Eine derartige Konfiguration ist beispielsweise in der DE 10 2008 007 877 B3 gezeigt.

Das Magnetventil 18 ist ein sogenanntes 3/2-Wegeventil. Es ist zugleich als Steuer- und Entlüftungsventileinrichtung mit integrierter Drossel ausgebildet. Durch die Feder 19 ist das Magnetventil 18 monostabil und zwar stabil in der Ruhelage.

Denkbar ist auch, dass das Magnetventil 18 als einfaches monostabiles 2/2-Wegeventil ausgebildet sein kann (dann ohne Entlüftungsfunktion).

Ebenso wird das pneumatisch steuerbare Steuerventil 20 durch wenigstens eine Feder 21 in eine Ruhelage gebracht.

Das Steuerventil 20 ist als ein 3/2-Wegeventil ausgeführt. Es ist jedoch durch die Art seiner Verschaltung bistabil ausgelegt.

In Figur 1 sind jeweils die Ruhelagen dargestellt, bei denen die entsprechenden Ventile 16, 18 bzw. 20 deaktiviert sind.

Die Parkbremseinrichtung 1 befindet sich dabei im Parkmodus.

Das erste Magnetventil 16 hat einen Eingang 16a und einen Ausgang 16b.

In ähnlicher Weise hat das zweite Magnetventil 18 einen Eingang 18a, einen Ausgang 18b und einen Entlüftungsausgang 18c.

In der dargestellten Ruhelage verbindet das Magnetventil 16 den Eingang 16a mit dem Ausgang 16b.

Das zweite Magnetventil 18 sperrt in der dargestellten Ruhestellung den Eingang 18a ab und verbindet den Ausgang 18b mit dem Entlüftungsausgang 18c. In der aktivierten Position verbindet das zweite Magnetventil 18 dagegen den Eingang 18a mit dem Ausgang 18b, während der Entlüftungsausgang 18c abgesperrt ist.

Das pneumatisch gesteuerte Steuerventil 20 hat ebenfalls drei Anschlüsse und zwar einen Eingang 20a, einen Ausgang 20b und einen weiteren Anschluss 20c. Der Eingang 20a ist über eine Verbindungsleitung 22, 22' mit dem Ausgang 16b des ersten Magnetventils 16 verbunden. Der Ausgang 20b ist über eine Verbindungsleitung 24, 24' mit einem Eingang 26a eines Select-High-Ventils 26 verbunden, während der Anschluss 20c über eine Verbindungsleitung 28, 28' mit dem Ausgang 18b des zweiten Magnetventils 18 verbunden ist.

Das pneumatisch steuerbare Steuerventil 20 sperrt in der abgebildeten Ruhestellung den Eingang 20a ab und verbindet den Ausgang 20b mit dem Anschluss 20c. In der aktivierten Stellung des Steuerventils 20 ist dagegen der Eingang 20a mit dem Ausgang 20b verbunden und der Anschluss 20c ist abgesperrt.

Das pneumatisch steuerbare Steuerventil 20 kann ein normales Pneumatikventil sein. Es kann auch ein pneumatisch steuerbares Servo-Ventil sein. Schließlich kann das Steuerventil 20 auch elektrisch steuerbar sein, d. h. es kann ein bistabiles elektrisch steuerbares Magnetventil sein.

Von der Leitung 28 zweigt eine weitere Leitung 28" ab, die mit dem Eingang 26b des Select-High-Ventils 26 verbunden ist.

In der Leitung 28 ist ferner ein Schnellentlüftungsventil 30 vorgesehen, das ein ESS-Ventil sein kann.

Die Verbindungsleitung 22"', die von der Leitung 22 abzweigt, führt zu einem Entlüftungsventil 32, das ein 2/2-Wegeventil (Magnetventil) ist, und ist mit dessen Eingang 32a verbunden. Das Entlüftungsventil 32 weist weiter einen Entlüftungsausgang 32b auf. In der dargestellten Stellung ist der Entlüftungsausgang 32b gesperrt. Das Entlüftungsventil 32 wird über die Feder 33 in eine Ruhelage gebracht. Durch die Feder 33 ist das Magnetventil 32 monostabil und zwar stabil in der Ruhelage.

Vom Ausgang 26c des Select-High-Ventils 26 verbindet eine Leitung 34 das Select-High-Ventil 26 mit einem Steuereingang 36a eines Relaisventils 36.

Ein weiterer Steuereingang 36b des Relaisventils 36 ist mit einer pneumatischen Leitung 38' verbunden, die eine pneumatische Steuerleitung vom Bremspedal des Fahrzeugs ist und die mit Druck der Betriebsbremse des Fahrzeugs beaufschlagt ist.

Der Anschluss 36c des Relaisventils 36 ist über eine Verbindungsleitung 38 mit dem Rückschlagventil 10 verbunden und hierüber an die Druckluftversorgung angeschlossen.

Der Ausgang 36d des Relaisventils 36 ist mit einer Zuleitung 40, 40' mit einer pneumatischen Bremsvorrichtung 42 für das Kraftfahrzeug bzw. Zugfahrzeug und mit einer weiteren Leitung 44 verbunden.

Die pneumatische Bremsvorrichtung 42 des Kraftfahrzeugs bzw. Zugfahrzeugs kann eine Druckkammer eines Federspeicher-Bremszylinders (nicht näher dargestellt) aufweisen. Die Federspeicherbremse ist dann gelöst, wenn die genannte Druckkammer des Federspeicher-Bremszylinders mit Druckluft beaufschlagt ist. Umgekehrt ist die Parkbremse durch die Feder des Federspeicher-Bremszylinders aktiviert, wenn die genannte Druckkammer entlüftet ist.

Stromabwärts des Relaisventils 36 ist neben der pneumatischen Bremsvorrichtung 42 für das Kraftfahrzeug bzw. Zugfahrzeug auch ein Anhängersteuermodul 46 angeordnet.

Das Anhängersteuermodul 46 ist dabei wie folgt angeschlossen:
Von der Leitung 40 zweigt eine Leitung 40" ab, die mit einem Eingang 48a eines Select-Low-Ventils 48 verbunden ist. Ein zweiter Eingang 48b des Select-Low-Ventils 48 ist über die Leitung 24, 24" mit dem Eingang 20b des Steuerventils 20 verbunden.

Ein Ausgang 48c des Select-Low-Ventils 48 ist über eine Leitung 50 mit einem Eingang 52a eines Select-High-Ventils 52 verbunden.

Ein weiterer Eingang 52b des Select-High-Ventils 52 ist mit einer Leitung 22" verbunden, in der sich ein 3/2-Wegeventil 54 (kann wie Magnetventil 18 ausgeführt sein) angeordnet ist. In der gezeigten Stellung sind die Anschlüsse 54a, 54b miteinander verbunden.

Über den Anschluss 54c kann entlüftet werden.

Das Anhängersteuermodul 46 ist wiederum über eine Leitung 56 am Anschluss 52c des Select-High-Ventils 52 angeschlossen.

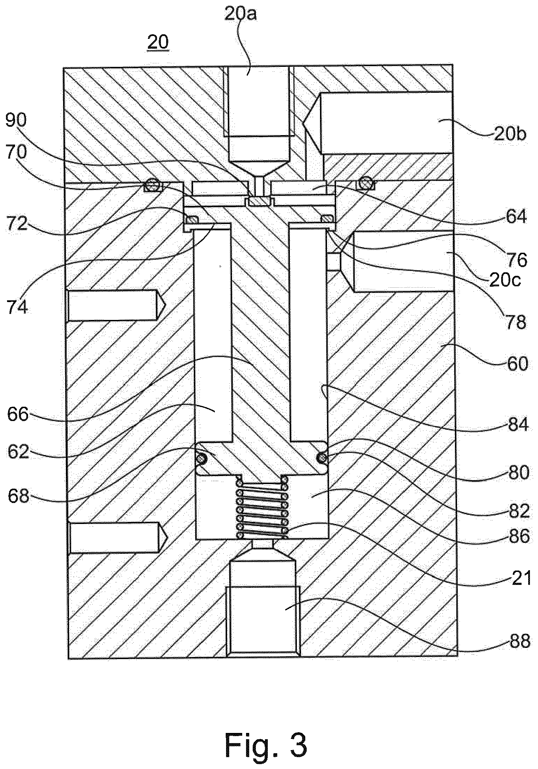

In den Figuren 3 bis 5 ist das Steuerventil 20 im Detail gezeigt.

Figur 3 zeigt dabei die Steuerventileinrichtung 20, also das Steuerventil 20, in der Stellung, in der sich das Steuerventil 20 im Parkmodus befindet, siehe auch Figur 1.

Das Steuerventil 20 hat ein Gehäuse 60 mit einem Zylinderraum 62 und einer Gehäusekammer 64.

Im Zylinderraum 62 des Gehäuses 60 ist ein Schaltkolben 66 geführt. Mittels der Feder 21 ist der Schaltkolben 66 federbelastet.

Wie bereits vorstehend beschrieben weist das Steuerventil 20 die Anschlüsse 20a, 20b und 20c auf. Der erste Anschluss 20a und der zweite Anschluss 20b sind mit der Gehäusekammer 64 verbunden. Der dritte Anschluss 20c ist mit dem Zylinderraum 62 verbunden.

Der Schaltkolben 66 weist einen ersten Kolbenring 68 und einen zweiten Kolbenring 70 auf. Der erste Kolbenring 68 ist im Zylinderraum 62 geführt und der zweite Kolbenring 70 ist außerhalb des Zylinderraums 62 in der Gehäusekammer 64 befindlich.

Im Wesentlichen sind zwei relevante Schaltstellungen für das Steuerventil 20 vorhanden.

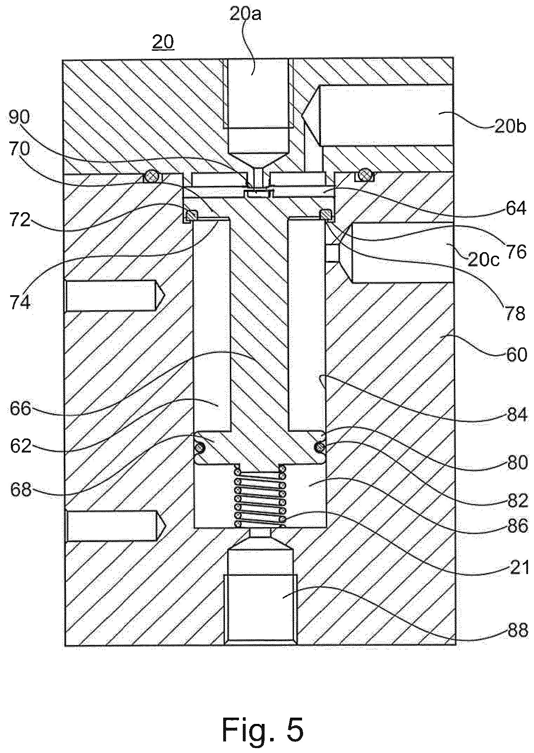

In der ersten Schaltstellung ist durch den zweiten Kolbenring 70 der Zylinderraum 62 gegen die Gehäusekammer 64 abgedichtet, vgl. Figur 5. In dieser ersten Schaltstellung sind die pneumatisch wirksamen Flächen des ersten Kolbenrings 68 und des zweiten Kolbenrings 70 im Wesentlichen identisch.

In der zweiten Schaltstellung sind der Zylinderraum 62 und die Gehäusekammer 64 miteinander verbunden, vgl. Figur 3.

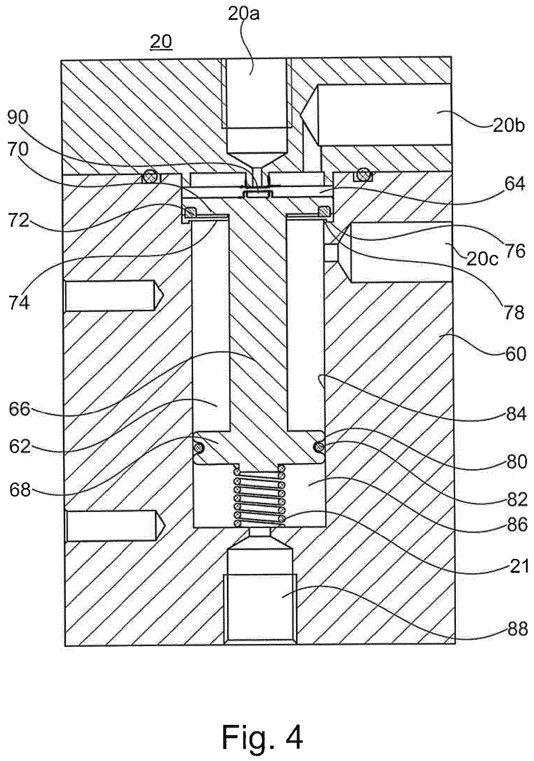

Figur 4 zeigt den Übergang von der ersten Schaltstellung in die zweite Schaltstellung.

Der Zylinderraum 62 ist gegen die Gehäusekammer 64 mittels einer am zweiten Kolbenring 70 angeordneten Dichtung 72 abgedichtet, wenn sich der Schaltkolben 66 in der ersten Schaltstellung befindet.

Die Dichtung 72 befindet sich dabei in der dem Zylinderraum 62 zugewandten Ringfläche 74 des zweiten Kolbenrings 70.

Am Übergang vom Zylinderraum 62 zur Gehäusekammer 64 ist durch eine Durchmesserverbreiterung im Gehäuse 60 ein Ansatz 76 vorgesehen, auf dem die Dichtung 72 in der ersten Schaltstellung dichtend anliegt.

Der Ansatz 76 weist einen umlaufenden Vorsprung 78 auf.

Außerdem ist in der Radialfläche 80 des ersten Kolbenrings 68 eine zweite Dichtung 82 angeordnet, die gegen die Wandung 84 des Zylinderraums 62 angestellt ist.

Die zweite Dichtung 82 ist die einzige Dichtung 82, die gegen die Wandung 84 des Zylinderraumes 62 angestellt ist.

Die Feder 21 ist in einem Federraum 86 angeordnet, der durch die zweite Dichtung 82 vom Zylinderraum 62 pneumatisch getrennt ist.

Der Federraum 86 weist einen weiteren Ausgang 88 auf. Der Ausgang 88 dient zum Druckausgleich und verbindet den Federraum 86 mit der Atmosphäre. Grundsätzlich kann vorgesehen sein, dass der Ausgang 88 auch als ein weiterer Steuereingang ausgebildet ist. Dies ist jedoch nicht zwingend erforderlich.

Wie in Figur 5 gezeigt, verschließt der zweite Kolbenring 70 in der zweiten Schaltstellung den ersten Anschluss 20a. Hierzu ist im zweiten Kolbenring 70 auf der vom Zylinderraum 62 abgewandten Seite ein Gummieinsatz 90 vorgesehen.

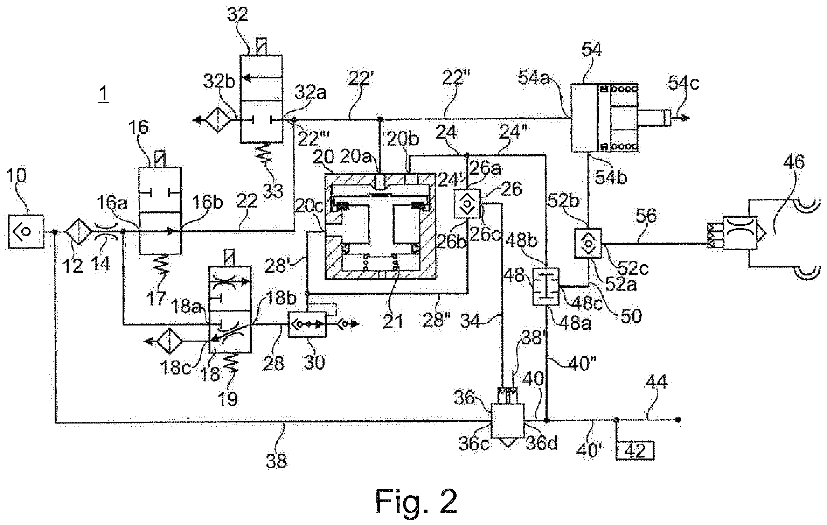

Im Folgenden wird die Wirkungsweise der Parkbremseinrichtung 1 gemäß Figur 1 und Figur 2 erläutert.

Die Einrichtung hat zwei sichere, stabile Zustände, nämlich den normalen Fahrzustand und den Zustand der aktivierten Parkbremse (wie in Figur 1 gezeigt). Bei Ausfall der elektrischen Versorgung wird der unmittelbar dem Ausfall vorhergehende Zustand stabil beibehalten.

Die Sicherheitsfunktion wird durch das bistabile Steuerventil 20 realisiert. Dieses Steuerventil 20 wird in der in Figur 1 dargestellten Parkstellung durch die Feder 21 gehalten. Die Anschlüsse 20b und 20c des Steuerventils 20 sind verbunden und über das Schnellentlüftungsventil 30 und das zweite Magnetventil 18 über den Eingang 18b zu dessen Entlüftungsausgang 18c hin entlüftet.

Das Steuerventil 20 ist deaktiviert und durch die Feder 21 in die dargestellte Stellung gebracht. Dies ist einer der zwei stabilen Zustände des Steuerventils 20.

In der Parkposition ist auf der Leitung 38 normalerweise kein Druck (Betriebsbremse deaktiviert), so dass an die pneumatischen Steuereingänge 36a und 36b des Relaisventils 36 Atmosphärendruck gelangt. Dieses ist damit entlüftet, so dass auch die Federkammer des Federspeicher-Bremszylinders der pneumatischen Bremsvorrichtung 42 entlüftet ist und damit die Parkbremse angelegt bzw. aktiviert ist.

Bei deaktivierter Parkbremse, d. h. im Fahrzustand wie in Figur 2 gezeigt, ist das Steuerventil 20 durchgeschaltet, d. h. aktiviert. Der Eingang 20a ist dann mit dem Ausgang 20b verbunden.

Über das aktivierte Steuerventil 20 gelangt Druck von der Druckmittelquelle über das Rückschlagventil 10 auch zum Steuereingang 36a des Relaisventils 36, welches durchschaltet und damit die Federkammer des Federspeicher-Bremszylinders der Betriebsbremse des Kraftfahrzeugs bzw. Zugfahrzeugs über die Leitung 40, 40' mit Druck beaufschlagt und damit die Betriebsbremse löst. Somit ist die Sicherheitsfunktion realisiert, d. h. beide beschriebenen Betriebszustände sind jeweils für sich stabil, unabhängig von dem Zustand der Stromversorgung der Magnetventile 16 und 18.

### Umschalten von Parkbremse auf Fahrzustand

Durch Betätigen des zweiten Magnetventils 18 wird dessen Eingang 18a mit dem Ausgang 18b verbunden. Damit gelangt Druckluft aus der Druckmittelquelle über das Rückschlagventil 10 zum Anschluss 20c des Steuerventils 20, von dessen Ausgang 20b zur Leitung 24. Gleichzeitig liegt aber bereits hoher Druck am Select-High-Ventil 26 an, der über die Leitung 28" zugeführt wird.

Da auch das Magnetventil 16 durchgeschaltet ist und am Eingang 20a Druck anliegt, schaltet das Steuerventil 20 durch und der Eingang 20a wird mit dem Ausgang 20b verbunden.

Das Ventil 18 kann dann wieder in die Ruheposition zurückkehren bzw. es ist unerheblich für den Fahrzustand, welche Position das Ventil 18 einnimmt.

Über das Select-High-Ventil 26 gelangt der vom Ausgang 20b kommende Druck an den Steuereingang 36a des Relaisventils 36, das durchschaltet und somit den Druck von seinem Eingang 36c zur Federkammer des Federspeicher-Bremszylinders über die Leitung 40, 40' gelangen lässt, so dass die Betriebsbremse des Kraftfahrzeugs bzw. Zugfahrzeugs gelöst wird. Das Steuerventil 20 ist dann in der zweiten, durch Druck gehaltenen stabilen Position.

### Umschalten vom Fahrzustand zur Parkbremse

Das Umschalten vom Fahrzustand zur Parkbremse erfolgt durch das erste Magnetventil 16 und durch das zweite Magnetventil 18, das Schnellentlüftungsventil 30 sowie über das Entlüftungsventil 32. Wird das erste Magnetventil 16 aktiviert, so werden sein Eingang 16a und sein Ausgang 16b abgesperrt. Außerdem wird das zweite Magnetventil 18 derart geschaltet, dass der Eingang 18a gesperrt und die Ausgänge 18b und 18c miteinander verbunden sind. Somit kann Druck über das Schnellentlüftungsventil 30 und den Entlüftungsausgang 18c des Magnetventils 18 entweichen. Da auch das Entlüftungsventil 32 derart geschaltet wird, dass der Eingang 33a und der Ausgang 32b miteinander verbunden sind, so dass über den Entlüftungsausgang 32b entlüftet werden kann, sinkt der Druck in den zum Steuerventil 20 führenden Leitungen ab.

Sobald dieser Druck einen vorgegebenen Schwellwert erreicht hat, der unter Anderem durch die Kraft der Feder 21 einstellbar ist, schaltet das Steuerventil 20 in die in Figur 1 gezeigte Ruhestellung zurück.

### Stretch-Brake-Funktion

Bei dieser Funktion wird nur die Bremse des Anhängers über das Anhängersteuermodul 46 aktiviert. Die pneumatische Bremsvorrichtung 42 wird im Fahrzustand gehalten.

Mit anderen Worten ist die Steuerventileinrichtung 20 derart geschaltet, dass das Relaisventil 36 durchgeschaltet ist und über die Leitung 38 der Betriebsdruck an der pneumatischen Bremse 42 anliegt und diese dadurch geöffnet ist, also im Fahrzustand ist.

Während der Ausführung der Stretch-Brake-Funktion ist über die Abzweigungsleitung 56 des Anhängersteuermoduls 46 wenigstens ein Steuereingang des Anhängersteuermoduls 46 Druck angelegt.

Das Magnetventil 16 ist geschlossen und die Magnetventile 18 und 32 sind geöffnet.

Das Steuerventil 20 ist ebenfalls geöffnet, d.h. die Anschlüsse 20a und 20b sind miteinander verbunden.

Über die Leitung 28" liegt der Betriebsdruck an dem Steuereingang 36a des Relaisventils 36 an, sodass dieses durchschaltet und die pneumatische Bremsvorrichtung 42 über die Leitung 38 mit Druckluft versorgt wird und damit geöffnet ist.

Deshalb liegt ebenfalls über die Leitung 28" am Ausgang 20c Druckluft an.

Aufgrund der Tatsache, dass die pneumatisch wirksamen Flächen des ersten Kolbenrings und des zweiten Kolbenrings im Wesentlichen identisch sind, hält die Steuerventileinrichtung 20 die für die Fahrstellung notwendige Stellung und schaltet nicht um.

In der Leitung 24 liegt ebenfalls Druck an. Somit liegt auch in der Abzweigungsleitung 56 des Anhängersteuermoduls 46 der in der Leitung 24 vorhandene Druck an.

Während der Ausführung der Stretch-Brake-Funktion wird mittels des Abluftventils 54 die über die Zuleitung 22" zugeführte Druckluft auf einen gewissen Druck eingestellt. Da am Select-High-Ventil 26 über den Eingang 26b ein höherer Betriebsdruck anliegt, genießt dieser Vorrang im Select-High-Ventil 26.

Weil im Select-Low-Ventil 48 am Ausgang 48a ebenfalls der höhere Betriebsdruck anliegt, wird das Select-Low-Ventil 48 durchgeschaltet und die in der Leitung 24, 24" befindliche Druckluft gelangt zum Anhängersteuermodul 46, sodass dieses aktiviert wird und die Bremse des Anhängers bremst.

## Patentansprüche

1. Steuerventileinrichtung (20) für eine Parkbremseinrichtung (1) für Kraftfahrzeuge mit einem Gehäuse (60), mit einem Zylinderraum (62) und einer Gehäusekammer (64), einem im Zylinderraum (62) des Gehäuses (60) geführten Schaltkolben (66), einer Feder (21), mittels derer der Schaltkolben (66) federbelastet ist, mit einem ersten Anschluss (20a) und einem zweiten Anschluss (20b), die mit der Gehäusekammer (64) verbunden sind, und einem dritten Anschluss (20c), der mit dem Zylinderraum (62) verbunden ist, wobei der Schaltkolben (66) einen ersten Kolbenring (68) und einen zweiten Kolbenring (70) aufweist, wobei der erste Kolbenring (68) im Zylinderraum (62) geführt ist und wobei der zweite Kolbenring (70) außerhalb des Zylinderraums (62) in der Gehäusekammer (64) befindlich ist, wobei in einer ersten Schaltstellung der zweite Kolbenring (70) den Zylinderraum (62) gegen die Gehäusekammer (64) abdichtet und in wenigstens einer zweiten Schaltstellung der Zylinderraum (62) und die Gehäusekammer (64) miteinander verbunden sind, **dadurch gekennzeichnet, dass** in der ersten Schaltstellung die pneumatisch wirksamen Flächen des ersten Kolbenrings (68) und des zweiten Kolbenrings (70), die einander zugewandt sind, im Wesentlichen identisch sind.

2. Steuerventileinrichtung (20) nach Anspruch 1, **dadurch gekennzeichnet, dass** der Zylinderraum (62) gegen die Gehäusekammer (64) mittels einer am zweiten Kolbenring angeordneten Dichtung (72) abgedichtet ist, wenn sich der Schaltkolben (66) in der ersten Schaltstellung befindet.

3. Steuerventileinrichtung (20) nach Anspruch 2, **dadurch gekennzeichnet, dass** die Dichtung (72) sich in der dem Zylinderraum (62) zugewandten Ringfläche (74) des zweiten Kolbenrings (70) befindet.

4. Steuerventileinrichtung (20) nach Anspruch 3, **dadurch gekennzeichnet, dass** am Übergang vom Zylinderraum (62) zur Gehäusekammer (64) durch eine Durchmesserverbreiterung im Gehäuse (60) ein Ansatz (76) vorgesehen ist, auf dem wenigstens ein Element der Dichtung (72) in der ersten Schaltstellung dichtend anliegt.

5. Steuerventileinrichtung (20) nach Anspruch 4, **dadurch gekennzeichnet, dass** der Ansatz (76) einen umlaufenden Vorsprung (78) aufweist.

6. Steuerventileinrichtung (20) nach Anspruch 3, **dadurch gekennzeichnet, dass** am Übergang vom Zylinderraum (62) zur Gehäusekammer (64) durch eine Durchmesserverbreiterung im Gehäuse (60) ein Ansatz (76) vorgesehen ist, an dem ein Dichtelement angeordnet ist, insbesondere wobei das Dichtelement ein O-Ring oder eine aufvulkanisierte Dichtung ist.

7. Steuerventileinrichtung (20) nach Anspruch 6, **dadurch gekennzeichnet, dass** der zweite Kolbenring auf dem Dichtelement in der zweiten Schaltstellung dichtend anliegt, insbesondere wobei der zweite Kolbenring einen umlaufenden Vorsprung aufweist, der dichtend auf dem Dichtelement anliegt.

8. Steuerventileinrichtung (20) nach einem der vorhergehenden Ansprüche, **dadurch gekennzeichnet, dass** in der Radialfläche (80) des ersten Kolbenrings (68) eine zweite Dichtung (82) angeordnet ist, die gegen die Wandung (84) des Zylinderraums (62) angestellt ist.

9. Steuerventileinrichtung (20) nach Anspruch 8, **dadurch gekennzeichnet, dass** die zweite Dichtung (82) die einzige Dichtung (82) ist, die gegen die Wandung (84) des Zylinderraums (62) angestellt ist.

10. Steuerventileinrichtung (20) nach Anspruch 8 oder Anspruch 9, **dadurch gekennzeichnet, dass** die Feder (21) in einem Federraum (86) angeordnet ist, der durch die zweite Dichtung (82) vom Zylinderraum (62) pneumatisch getrennt ist.

11. Steuerventileinrichtung (20) nach Anspruch 10, **dadurch gekennzeichnet, dass** der Federraum (86) einen weiteren Anschluss (88) aufweist.

12. Steuerventileinrichtung (20) nach einem der vorhergehenden Ansprüche, **dadurch gekennzeichnet, dass** der zweite Kolbenring (70) in der zweiten Schaltstellung den ersten Anschluss (20a) verschließt.

13. Parkbremseinrichtung (1) für Kraftfahrzeuge mit wenigstens einer Steuerventileinrichtung (20) nach einem der vorhergehenden Ansprüche.

## Claims

1. Control valve device (20) for a parking brake device (1) for motor vehicles, having a housing (60), having a cylinder space (62) and having a housing chamber (64), having a switching piston (66) guided in the cylinder space (62) of the housing (60), having a spring (21) by means of which the switching piston (66) is spring-loaded, having a first port (20a) and having a second port (20b) which are connected to the housing chamber (64), and having a third port (20c) which is connected to the cylinder space (62), wherein the switching piston (66) has a first piston ring (68) and a second piston ring (70), wherein the first piston ring (68) is guided in the cylinder space (62), and wherein the second piston ring (70) is situated outside the cylinder space (62) in the housing chamber (64), wherein, in a first switching position, the second piston ring (70) seals off the cylinder space (62) with respect to the housing chamber (64), and in at least one second switching position, the cylinder space (62) and the housing chamber (64) are connected to one another, **characterized in that**, in the first switching position, the pneumatically active surfaces of the first piston ring (68) and of the second piston ring (70), which face towards one another, are substantially identical.

2. Control valve device (20) according to Claim 1, **characterized in that** the cylinder space (62) is sealed off with respect to the housing chamber (64) by means of a seal (72) arranged on the second piston ring when the switching piston (66) is situated in the first switching position.

3. Control valve device (20) according to Claim 2, **characterized in that** the seal (72) is situated **in that** ring surface (74) of the second piston ring (70) which faces towards the cylinder space (62).

4. Control valve device (20) according to Claim 3, **characterized in that** a shoulder (76) is provided at the transition from the cylinder space (62) to the housing chamber (64) by means of a diameter widening in the housing (60), against which shoulder at least one element of the seal (72) bears sealingly in the first switching position.

5. Control valve device (20) according to Claim 4, **characterized in that** the shoulder (76) has an encircling projection (78).

6. Control valve device (20) according to Claim 3, **characterized in that** a shoulder (76) is provided at the transition from the cylinder space (62) to the housing chamber (64) by means of a diameter widening in the housing (60), on which shoulder there is arranged a sealing element, wherein in particular, the sealing element is an O-ring or a vulcanized-on seal.

7. Control valve device (20) according to Claim 6, **characterized in that** the second piston ring bears sealingly against the sealing element in the second switching position, wherein in particular, the second piston ring has an encircling projection which bears sealingly against the sealing element.

8. Control valve device (20) according to one of the preceding claims, **characterized in that**, in the radial surface (80) of the first piston ring (68), there is arranged a second seal (82) which is positioned against the wall (84) of the cylinder space (62).

9. Control valve device (20) according to Claim 8, **characterized in that** the second seal (82) is the only seal (82) which is positioned against the wall (84) of the cylinder space (62).

10. Control valve device (20) according to Claim 8 or Claim 9, **characterized in that** the spring (21) is arranged in a spring space (86) which is pneumatically separated from the cylinder space (62) by the second seal (82).

11. Control valve device (20) according to Claim 10, **characterized in that** the spring space (86) has a further port (88).

12. Control valve device (20) according to one of the preceding claims, **characterized in that** the second piston ring (70) closes off the first port (20a) in the second switching position.

13. Parking brake device (1) for motor vehicles, having at least one control valve device (20) according to one of the preceding claims.

## Revendications

1. Dispositif (20) de vanne de commande d'un dispositif (1) de frein de stationnement de véhicule automobile, comprenant un corps (60), comprenant un espace (62) cylindrique et une chambre (64) de corps, un piston (66) de commutation guidé dans l'espace (62) cylindrique du corps (60), un ressort (21), auquel le piston (66) de commutation est soumis, comprenant un premier raccord (20a) et un deuxième raccord (20b), qui communiquent avec la chambre (64) du corps, et un troisième raccord (20c), qui communique avec l'espace (62) cylindrique, dans lequel le piston (66) de commutation a un premier segment (68) de piston et un deuxième segment (70) de piston, dans lequel le premier segment (68) de piston est guidé dans l'espace (62) cylindrique, et dans lequel le deuxième segment (70) de piston se trouve à l'extérieur de l'espace (62) cylindrique dans la chambre (64) du piston, dans lequel, dans une première position de commutation, le deuxième segment (70) de piston rend l'espace (62) cylindrique étanche vis-à-vis de la chambre (64) du corps, et dans une deuxième position de commutation met l'espace (62) cylindrique et la chambre (64) du piston en communication, **caractérisé en ce que,** dans la première position de commutation, les surfaces efficaces pneumatiquement du premier segment (68) de piston et du deuxième segment (70) de piston, qui sont tournées l'une vers l'autre, sont, pour l'essentiel, pareilles.

2. Dispositif (20) de vanne de commande suivant la revendication 1, **caractérisé en ce que** l'espace (62) cylindrique est rendu étanche par rapport à la chambre (64) de corps, au moyen d'une garniture (72) d'étanchéité disposée sur le deuxième segment de piston, lorsque le piston (66) de commutation se trouve dans la première position de commutation.

3. Dispositif (20) de vanne de commande suivant la revendication 2, **caractérisé en ce que** la garniture (72) d'étanchéité se trouve dans la surface (74) annulaire, tournée vers l'espace (62) cylindrique du deuxième segment (70) de piston.

4. Dispositif (20) de vanne de commande suivant la revendication 3, **caractérisé en ce qu'**à la transition de l'espace (62) cylindrique à la chambre (64) du corps est prévu, par un agrandissement de diamètre du corps (60), un appendice (76), auquel s'applique d'une manière étanche dans la première position de commutation au moins un élément de la garniture (72) d'étanchéité.

5. Dispositif (20) de vanne de commande suivant la revendication 4, **caractérisé en ce que** l'appendice (76) a une saillie (78) faisant le tour.

6. Dispositif (20) de vanne de commande suivant la revendication 3, **caractérisé en ce qu'**à la transition de l'espace (62) cylindrique à la chambre (64) du corps est prévu, par un agrandissement du diamètre du corps (60), un appendice (76), sur lequel est disposé un élément d'étanchéité, dans lequel notamment l'élément d'étanchéité est un joint torique ou une garniture d'étanchéité vulcanisée.

7. Dispositif (20) de vanne de commande suivant la revendication 6, **caractérisé en ce que** le deuxième segment de piston s'applique d'une manière étanche dans la deuxième position de commutation à l'élément d'étanchéité, dans lequel notamment le deuxième segment de piston a une saillie faisant le tour, qui s'applique avec étanchéité à l'élément d'étanchéité.

8. Dispositif (20) de vanne de commande suivant l'une des revendications précédentes, **caractérisé en ce que,** dans la surface (80) radiale du premier segment (68) de piston est disposée une deuxième garniture (82) d'étanchéité, qui est mise sur la paroi (84) de l'espace (62) cylindrique.

9. Dispositif (20) de vanne de commande suivant la revendication 8, **caractérisé en ce que** la deuxième garniture (82) d'étanchéité est la seule garniture (82) d'étanchéité, qui s'applique à la paroi (84) de l'espace (62) cylindrique.

10. Dispositif (20) de vanne de commande suivant la revendication 8 ou la revendication 9, **caractérisé en ce que** le ressort (21) est disposé dans un espace (86) pour ressort, qui est séparé pneumatiquement de l'espace (62) cylindrique par la deuxième garniture (82) d'étanchéité.

11. Dispositif (20) de vanne de commande suivant la revendication 10, **caractérisé en ce que** l'espace (86) pour ressort a un autre raccord (88).

12. Dispositif (20) de vanne de commande suivant l'une des revendications précédentes, **caractérisé en ce que** le deuxième segment (70) d'étanchéité ferme le premier raccord (20a) dans la deuxième position de commutation.

13. Dispositif (1) de frein de stationnement de véhicule automobile ayant au moins un dispositif (20) de vanne de commande suivant l'une des revendications précédentes.
